# EUROPEAN PATENT APPLICATION

(11) **EP 4 597 617 A1**
(43) Date of publication of application: **06.08.2025**
(21) Application number: 24198724.7
(22) Date of filing: 05.09.2024
(51) Int. Cl.: H01M 4/139, H01M 10/04

(54) **AUTOMATIC ELECTRODE PLATE READING APPARATUS FOR SECONDARY BATTERIES**

(30) Priority: 05.02.2024 KR 20240017465
(71) Applicant: Lee, Kye-seol, Seoul (KR)
(72) Inventor: Lee, Kye-seol, Seoul (KR)
(74) Representative: Wunderlich & Heim Patentanwälte PartG mbB

(57) **Abstract**

Disclosed is an automatic electrode plate reading apparatus for secondary batteries which, when an arm descends, vacuum-adsorbs and grips a barcode part of a standby electrode plate, and then rises in the state in which an EPC sensor and a replacement preparation core move backwards, a first roller moves to the right, a third roller descends and second rollers rise, automatically connects the electrode plate vacuum-adsorbed and gripped by the arm to the replacement preparation core so as to be kept taut in the state in which the first roller moves to the left, the second rollers descend, the third roller rises and the EPC sensor and the replacement preparation core move forwards. The automatic electrode plate reading apparatus includes for secondary batteries includes a standby electrode plate (1) prepared in a roll form to replace an electrode plate around a core and rotatably installed, an EPC sensor (2), a first roller (3) configured to move left when an arm (8) descends, and to move right to push the standby electrode plate (1) when the arm (8) rises, second rollers (4) rotatably installed to place the standby electrode plate (1) at a regular position, and a third roller (6) installed below the second rollers (4) and configured to descend before the arm (8) descends and to rise so as to keep the standby electrode plate (1) taut after the arm (8) rises, and, in the state in which the arm (8) descends by an arm drive motor (11), detects a barcode on the standby electrode plate (1), vacuum-adsorbs the end of the standby electrode plate (1) through a vacuum adsorber (9) and grips the end of the standby electrode plate (1) by a barcode gripper (1) and then rises, the standby electrode plate (1) is connected to a replacement preparation core (7) so as to be kept taut.

## Description

### BACKGROUND OF THE INVENTION

### Field of the Invention

The present invention relates to an automatic electrode plate reading apparatus for secondary batteries, and more particularly, to an automatic electrode plate reading apparatus for secondary batteries which, when an arm descends, vacuum-adsorbs and grips a barcode part of a standby electrode plate, and then rises in the state in which an EPC sensor and a replacement preparation core move backwards, a first roller moves to the right, a third roller descends and second rollers rise, automatically connects the electrode plate vacuum-adsorbed and gripped by the arm to the replacement preparation core so as to be kept taut in the state in which the first roller moves to the left, the second rollers descend, the third roller rises and the EPC sensor and the replacement preparation core move forwards.

### Description of the Related Art

In general, secondary batteries are classified into can-type secondary batteries and pouch-type secondary batteries depending on the shape of an external case, and the pouch-type secondary battery includes battery cells configured such that electrode tabs are formed at one side of electrode plates (cathode plates and anode plates), and a pouch which surrounds and seals the electrode plates so that the electrode tabs are drawn to the outside.

The battery cells are configured such that separators are interposed between a plurality of cathode plates and a plurality of anode plates, and the battery cells are mounted and sealed in the pouch such that the electrode tabs formed at one side of the electrode cells are drawn to the outside of the pouch.

Such a structure in which the battery cells are embedded in the pouch is referred to as a pouch-type secondary battery, and the battery cells are obtained by stacking a plurality of cathode plates and a plurality of anode plates with separators interposed therebetween.

### RELATED ART DOCUMENTS

### PATENT DOCUMENT

(Patent Document 0001) Korean Patent Registration No. 10-114044 (Registration Date: April 19, 2012)
(Patent Document 0002) Korean Patent Registration No. 10-2574573 (Registration Date: August 31, 2023)

### SUMMARY OF THE INVENTION

Therefore, the present invention has been made in view of the above problems, and it is an object of the present invention to provide an automatic electrode plate reading apparatus for secondary batteries which, when an arm descends, detects a barcode at the end of a standby electrode plate, vacuum-adsorbs the end of the standby electrode plate, and then rises in the state in which an EPC sensor and a replacement preparation core move backwards, a first roller moves to the right, a third roller descends and second rollers rise, automatically connects the electrode plate vacuum-adsorbed and gripped by the arm to the replacement preparation core in the state in which the first roller moves to the left, the second rollers descend, the third roller rises and the EPC sensor and the replacement preparation core move forwards.

In accordance with the present invention, the above and other objects can be accomplished by the provision an automatic electrode plate reading apparatus for secondary batteries including a standby electrode plate prepared in a roll form to replace an electrode plate around a core and rotatably installed, an EPC sensor, a first roller configured to move left when an arm descends, and to move right to push the standby electrode plate when the arm rises, second rollers rotatably installed to place the standby electrode plate at a regular position, a third roller installed below the second rollers and configured to descend before the arm descends and to rise so as to keep the standby electrode plate taut after the arm rises, the arm rotated to rise or descend by an arm drive motor, and a replacement preparation core configured to receive the standby electrode plate, when the arm descends, detects a barcode on the standby electrode plate, vacuum-adsorbs the standby electrode plate and then rises.

The arm may include a standby electrode plate reader configured to move forwards and backwards so as to recognize a barcode part of the standby electrode plate, a vacuum adsorber installed at an end of the standby electrode plate reader to vacuum-adsorb the standby electrode plate after recognizing the barcode part, a barcode gripper configured to grip the standby electrode plate vacuum-adsorbed by the vacuum adsorber, and the arm drive motor configured to drive the arm.

A guide bar of the third roller may be configured such that both ends of the guide bar are hinged so that the guide bar is rotatable while rising and descending along a vertical axis.

### BRIEF DESCRIPTION OF THE DRAWINGS

The above and other objects, features and other advantages of the present invention will be more clearly understood from the following detailed description taken in conjunction with the accompanying drawings, in which:

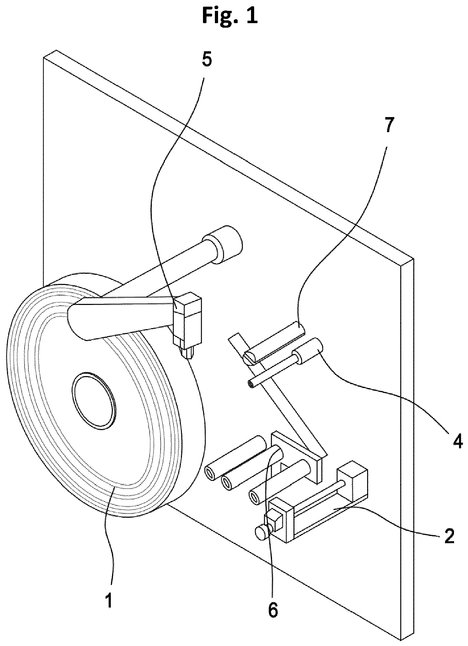

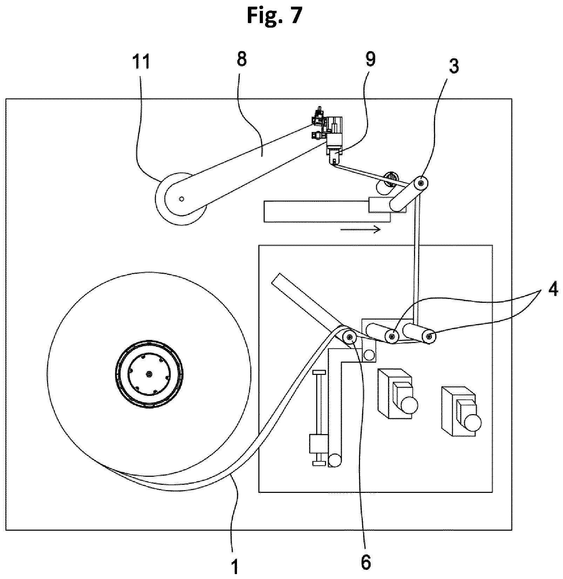

FIGs. 1 and 7 are views showing a case in which a standby electrode plate prepared in a roll form is located on the left side of an automatic electrode plate reading apparatus for secondary batteries according to the present invention, more specifically:
FIG. 1 is an overall perspective view of the automatic electrode plate reading apparatus according to the present invention;
FIG. 2 is a perspective view for explaining the operation of the automatic electrode plate reading apparatus depending on elements provided on the rear surface of the standby electrode plate prepared in the roll form;
FIG. 3 is a perspective view for explaining the operation of an arm according to the present invention;

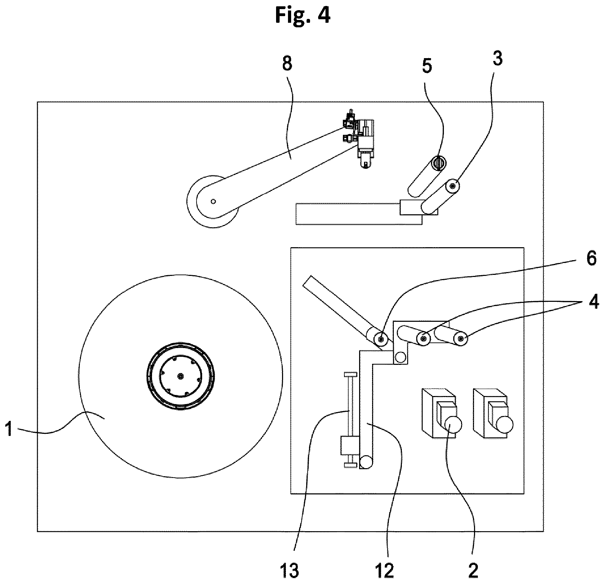

FIG. 4 is a view showing a case in which the arm according to the present invention is located at an initial top position;

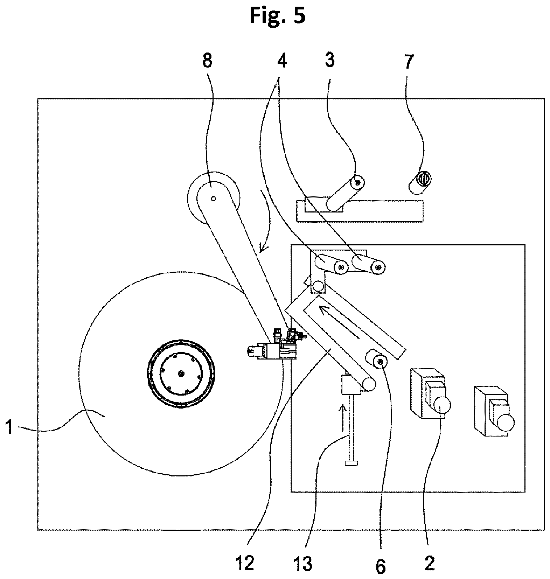

FIG. 5 is a view showing a process in which the arm according to the present invention descends to detect a barcode on the standby electrode plate and to vacuum-adsorb the electrode plate;

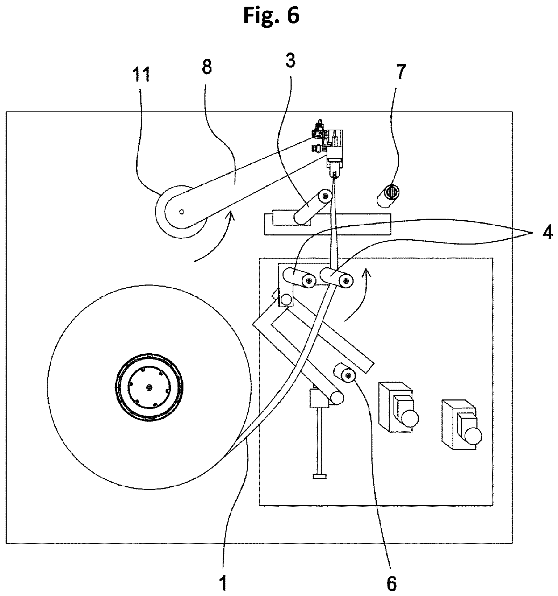

FIG. 6 is a view showing a process in which the arm according to the present invention rises again in the state of gripping the electrode plate; and
FIG. 7 is a view showing a process in which, in the state in which the arm according to the present invention rises and returns to an original position thereof, first to third rollers move to connect the electrode plate to a replacement preparation core while keeping the electrode plate taut.

### DETAILED DESCRIPTION OF THE INVENTION

Hereinafter, reference will be made in detail to various embodiments of the present invention, examples of which are illustrated in the accompanying drawings and described below.

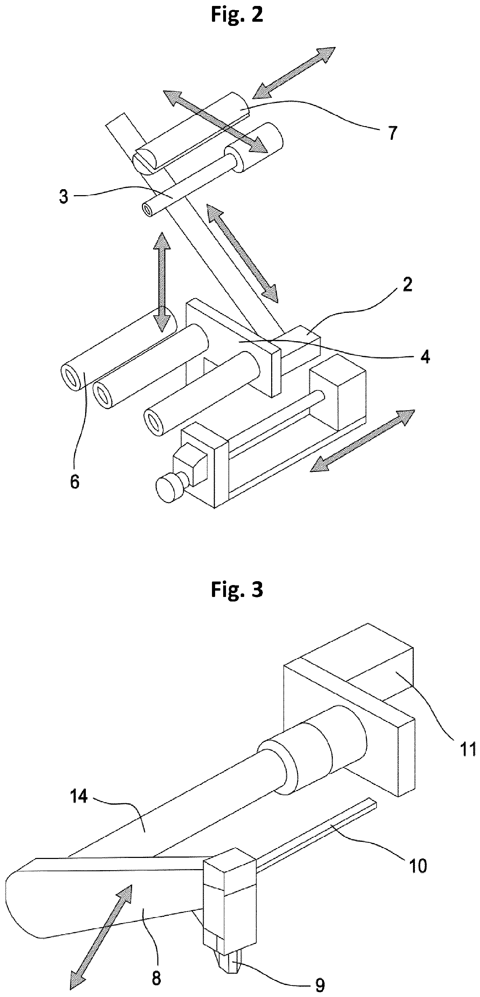

FIG. 1 is an overall perspective view of an automatic electrode plate reading apparatus for secondary batteries according to the present invention, FIG. 2 is a perspective view for explaining the operation of the automatic electrode plate reading apparatus depending on elements provided on the rear surface of a standby electrode plate prepared in a roll form, FIG. 3 is a perspective view for explaining the operation of an arm according to the present invention, and as shown in these figures, and as shown in these figures, the automatic electrode plate reading apparatus according to the present invention includes a standby electrode plate 1 prepared in a roll form to replace an electrode plate around a core and rotatably installed, an EPC sensor 2, a first roller 3 configured to move to the left when an arm 8 descends and to move to the right when the arm 8 rises, second rollers 4 rotatably installed to place the standby electrode plate 1 at a regular position, a third roller 6 installed below the second rollers 4 and configured to descend before the arm 8 descends and to rise after the arm 8 rises, the arm 8 rotated to rise or descend by an arm drive motor 11, and a replacement preparation core 7 configured to be movable forwards and backwards and prepared to receive the standby electrode plate 1 when the arm descends, vacuum-adsorbs the end of the standby electrode plate 1 and then rises, and reference numeral 14, which is not described herein, refers to a rotation shaft 8 configured to rotate the arm 8.

The arm 8 includes a standby electrode plate reader 5 configured to move forwards and backwards so as to recognize a barcode part of the standby electrode plate 1, a vacuum adsorber 9 installed at the end of the standby electrode plate reader 5 to vacuum-adsorb the standby electrode plate 1, a barcode gripper 10 configured to grip the standby electrode plate 1 vacuum-adsorbed by the vacuum adsorber 9, and the arm drive motor 11 configured to drive the arm 8.

Hereinafter, the operation of the automatic electrode plate reading apparatus according to the present invention configured as described above will be described below.

In a primary step, in the state in which the EPC sensor 2 moves backwards, the replacement preparation core 7 also moves backwards, the first roller 3 moves to the right, and the third roller 6 descends, an automatic standby electrode plate replacement preparation stage, i.e., a preparation stage for replacing the existing electrode plate with the standby electrode plate 1, is performed.

In a second step, the second rollers 4 rise, and at this time, an L-shaped guide bar 12 connected to the second rollers 4 rises along a vertical axis 13, the second rollers 4 rise obliquely to the right at an angle of 45 degrees and then stop at the right. Both ends of the guide bar 12 are hinged so that the guide bar 12 is rotatable.

In a third step, the EPC sensor 2 and the replacement preparation core 7 move backwards, the first roller 3 moves to the right, the arm 8 of the automatic electrode plate reading apparatus is rotated in one direction by the arm drive motor 11 and descends, and the third roller 6 rises.

Here, the reason why the first roller 3 moves to the right is for the first roller 3 to move to the left to push the standby electrode plate 1 to the left so as to keep the standby electrode plate 1 taut, when the arm 8 subsequently grips the standby electrode plate 1 and rises.

In a fourth step, when the arm 8 of the automatic electrode plate reading apparatus is rotated and descends to touch the standby electrode plate 1, a sensor detects the standby electrode plate 1 and thus movement of the arm 8 is stopped.

In a fifth step, as the standby electrode plate 1 is rotated in the stopped state of the arm 8, when the standby electrode plate reader 5 moves forwards to read a barcode, the standby electrode plate 1 is placed at a regular position using the sensor.

In a sixth step, in the state in which the electrode plate reader 5 of the arm 8 reads the barcode and thus the standby electrode plate 1 is placed at the regular position, the vacuum adsorber 9 moves forwards due to operation of a silicone pad or the like.

In a seventh step, the vacuum adsorber 9 moved forwards vacuum-adsorbs the end of the standby electrode plate 1, and then moves backwards.

In an eighth step, in the state in which the vacuum adsorber 9 vacuum-adsorbs the standby electrode plate 1, the barcode gripper 10 is turned on and grips the end of the standby electrode plate 1, thus making it possible to move the standby electrode plate 1 while holding the end of the standby electrode plate 1.

In a ninth step, in the state in which the arm 8 of the automatic electrode plate reading apparatus vacuum-adsorbs and grips the end of the standby electrode plate 1, the arm 8 rises upwards due to reverse driving of the arm drive motor 11.

In a tenth step, the arm 8 of the automatic electrode plate reading apparatus detects the position of a groove using the sensor, and then stops.

In an eleventh step, the first roller 3 moves to the left and pushes the standby electrode plate 1 to the left, and at this time, the second rollers 4 descend obliquely and also pushes a portion of the standby electrode plate 1 located below the first roller 3 to the left, thereby causing the standby electrode plate 1 to become somewhat taut.

In a twelfth step, the third roller 3 rises and pushes the electrode plate 1 upwards, thereby keeping the standby electrode plate 1 taut.

In a thirteenth step, as the EPC sensor 2 moves forwards, the replacement preparation core 7 provided at the upper end of the automatic electrode plate reading apparatus also moves forwards.

In a fourteenth step, as the replacement preparation core 7 is rotated and the vacuum-adsorbed state of the standby electrode plate 1 by the arm 8 is released, the standby electrode plate 1 is wound on the replacement preparation core 7 and is simultaneously kept in a taut state. Thereby, an automatic electrode plate reading process is completed.

As is apparent from the above description, in an automatic electrode plate reading apparatus for secondary batteries according to the present invention, when an arm is rotated by an arm drive motor and thus descends or rises, a standby electrode plate may be automatically connected to a replacement preparation core in the state in which an end of the standby electrode plate is gripped by detecting a barcode on the standby electrode plate by operation of first to third rollers, an EPC sensor, and the like.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An automatic electrode plate reading apparatus for secondary batteries comprising:
a standby electrode plate (1) prepared in a roll form to replace an electrode plate around a core and rotatably installed;
an EPC sensor (2);
a first roller (3) configured to move left when an arm (8) descends, and to move right to push the standby electrode plate (1) when the arm (8) rises;
second rollers (4) rotatably installed to place the standby electrode plate (1) at a regular position;
a third roller (6) installed below the second rollers (4) and configured to descend before the arm (8) descends and to rise so as to keep the standby electrode plate (1) taut after the arm (8) rises;
the arm (8) rotated to rise or descend by an arm drive motor (11); and
a replacement preparation core (7) configured to receive the standby electrode plate (1), when the arm (8) descends, detects a barcode on the standby electrode plate (1), vacuum-adsorbs the standby electrode plate (1) and then rises.

2. The automatic electrode plate reading apparatus according to claim 1, wherein the arm (8) comprises:
a standby electrode plate reader (5) configured to move forwards and backwards so as to recognize a barcode part of the standby electrode plate (1);
a vacuum adsorber (9) installed at an end of the standby electrode plate reader (5) to vacuum-adsorb the standby electrode plate (1) after recognizing the barcode part;
a barcode gripper (10) configured to grip the standby electrode plate (1) vacuum-adsorbed by the vacuum adsorber (9); and
the arm drive motor (11) configured to drive the arm (8) .

3. The automatic electrode plate reading apparatus according to claim 1, wherein a guide bar (12) of the third roller (6) is configured such that both ends of the guide bar (12) are hinged so that the guide bar (12) is rotatable while rising and descending along a vertical axis (13).

## Amended claims

### Amended claims in accordance with Rule 137(2) EPC.

1. An automatic electrode plate reading apparatus for secondary batteries comprising:
a standby electrode plate (1) prepared in a roll form to replace an electrode plate around a core and rotatably installed; and
an EPC sensor (2);
**characterized in that** the automatic electrode plate reading apparatus further comprises:
a first roller (3) configured to move left when an arm (8) descends, and to move right to push the standby electrode plate (1) when the arm (8) rises;
second rollers (4) rotatably installed to place the standby electrode plate (1) at a regular position;
a third roller (6) installed below the second rollers (4) and configured to descend before the arm (8) descends and to rise so as to keep the standby electrode plate (1) taut after the arm (8) rises, the arm (8) rotatable to rise or descend by an arm drive motor (11); and
a replacement preparation core (7) configured to receive the standby electrode plate (1), when the arm (8) descends, detects a barcode on the standby electrode plate (1), vacuum-adsorbs the standby electrode plate (1) and then rises.

2. The automatic electrode plate reading apparatus according to claim 1, wherein the arm (8) comprises:
a standby electrode plate reader (5) configured to move forwards and backwards so as to recognize a barcode part of the standby electrode plate (1);
a vacuum adsorber (9) installed at an end of the standby electrode plate reader (5) to vacuum-adsorb the standby electrode plate (1) after recognizing the barcode part;
a barcode gripper (10) configured to grip the standby electrode plate (1) vacuum-adsorbed by the vacuum adsorber (9); and
the arm drive motor (11) configured to drive the arm (8).

3. The automatic electrode plate reading apparatus according to claim 1, wherein a guide bar (12) of the third roller (6) is configured such that both ends of the guide bar (12) are hinged so that the guide bar (12) is rotatable while rising and descending along a vertical axis (13).
